# EUROPÄISCHE PATENTANMELDUNG

(11) **EP 2 908 197 A1**
(43) Veröffentlichungstag der Anmeldung: **19.08.2015**
(21) Anmeldenummer: 14154901.4
(22) Anmeldetag: 12.02.2014
(51) Int. Cl.: G05B 19/05, G06F 9/44

(54) **Verfahren und Engineering-System zum Laden von Objekten eines Steuerprogramms in ein Automatisierungsgerät**

(71) Anmelder: Siemens Aktiengesellschaft, 80333 München (DE)
(72) Erfinder: Schmuck, Axel, 76149 Karlsruhe (DE); Farrell, Sean, 76131 Karlsruhe (DE); Kruser, Jürgen, 68766 Hockenheim (DE)

(57) **Zusammenfassung**

Die Erfindung betrifft ein Verfahren und ein Engineering-System zum Laden von Objekten eines Steuerprogramms in ein Automatisierungsgerät, wobei mittels eines Engineering-Systems im Rahmen einer grafischen Projektierung des Steuerprogramms in Projektierungsschritten (P1 bis P4) vorgefertigte Bausteine (B3, B4) aus einem Bausteinvorrat ausgewählt sowie in einen Funktionsplan (CP) positioniert und die Bausteine parametriert und verschaltet werden, und wobei aus dem Funktionsplan (CP) die Objekte (Obl bis Ob7) des Steuerprogramms erzeugt und die Objekte (Obl bis Ob7) in eine Verarbeitungseinheit des Automatisierungsgerätes geladen werden. Es werden Maßnahmen vorgeschlagen, welche einem Anwender bzw. einem Projekteur ermöglichen, nur die durch seine Projektierungsschritte bewirkten Objektänderungen zu laden.

## Beschreibung

Die Erfindung betrifft ein Verfahren zum Laden von Objekten eines Steuerprogramms in ein Automatisierungsgerät, wobei mittels eines Engineering-Systems im Rahmen einer grafischen Projektierung des Steuerprogramms in Projektierungsschritten vorgefertigte Bausteine aus einem Bausteinvorrat ausgewählt sowie in einen Funktionsplan positioniert und die Bausteine parametriert und verschaltet werden, und wobei aus dem Funktionsplan die Objekte des Steuerprogramms erzeugt und die Objekte in eine Verarbeitungseinheit des Automatisierungsgerätes geladen werden. Darüber hinaus betrifft die Erfindung ein Engineering-System zur Durchführung des Verfahrens.

Ein derartiges Verfahren sowie ein derartiges Engineering-System sind aus dem Siemens-Katalog ST PCS 7, Kapitel 4, Ausgabe 2013 bekannt. Im Rahmen einer grafischen Projektierung erstellt ein Anwender mittels eines sogenannten CFC (Continuous Function Chart)-Editors des Engineering-Systems aus vorgefertigten Software-Bausteinen eines Bausteinvorrats ein Steuerprogramm für ein Automatisierungsgerät (speicherprogrammierbare Steuerung, Programmable Logic Controller (PLC)), das zur Steuerung eines technischen Prozesses vorgesehen ist. Dazu wählt der Anwender beispielsweise Regler-Bausteine aus dem Bausteinvorrat aus, positioniert bzw. platziert diese per Drag&Drop in einen CFC-Plan, parametriert die Bausteine und verschaltet diese mittels einer Maus miteinander, wobei ein Ausgang eines Bausteins mit einem Eingang eines oder mehrerer Bausteine verschaltet werden kann. Anschließend erzeugt nach einer entsprechenden Menüeingabe des Anwenders das Engineering-System aus dem CFC-Plan bzw. aus den parametrierten und verschalteten Bausteinen des CFC-Plans Objekte des Steuerprogramms, z. B. Objekte in Form von sogenannten Funktions-Codebausteinen, Global Daten- oder Instanz-Datenbausteinen, wobei aus einem Baustein des CFC-Plans mehrere Objekte erzeugt werden. Diese Objekte, welche ein Abbild des projektierten CFC-Plans repräsentieren, werden schließlich nach einer weiteren Menüeingabe des Anwenders in eine CPU- oder Verarbeitungseinheit des Automatisierungsgerätes geladen, wobei die CPU- oder Verarbeitungseinheit aus diesen Objekten einen geeigneten Maschinencode erzeugt, der in einem RUN-Betrieb zur Steuerung des Prozesses verarbeitet wird.

Es kann nun vorkommen, dass im Rahmen einer Inbetriebsetzung ein CFC-Plan geändert werden muss, um beispielsweise die Verschaltung oder die Parametrierung eines PID-Regler-Bausteins zu ändern oder diesen durch einen anderen Regler-Baustein zu ersetzen und zu testen. Eine derartige Baustein-Änderung am CFC-Plan bewirkt gewöhnlich eine Vielzahl von Änderungen an den zu ladenden Objekten. Dabei kann es ferner vorkommen, dass während eines so genannten Concurrent-Engineerings ein erster Anwender bzw. Projekteur nicht weiß bzw. diesem Projekteur nicht bekannt ist, ob ein zweiter Projekteur den CFC-Plan geändert hat, wobei die durch die Projekteure bewerkstelligten Änderungen sich zumindest teilweise auf die zu ladenden Objekte auswirken können. Beispielsweise bewirkt ein Projektierungsschritt eines ersten Projekteurs - z. B. in Form einer Änderung der Verschaltung an einem Regler-Baustein - eine Veränderung an zu ladenden Objekten DB1, DB2, FC1 und ein Projektierungsschritt eines zweiten Projekteurs - z. B. in Form einer Parameteränderung an diesem Regler-Baustein - eine Veränderung an zu ladenden Objekten FC2, DB4 und ebenfalls eine Veränderung an dem zu ladenden Objekt DB1. Dies bedeutet, dass einerseits ein Projektierungsschritt eine Änderung an mindestens einem Objekt auslöst, und andererseits, dass an einem geänderten Objekt die Änderungen durch mehrere Projektierungsschritte ausgelöst worden sein können.

Der Erfindung liegt daher die Aufgabe zugrunde, ein Verfahren der eingangs genannten Art anzugeben, welches einem Anwender bzw. einem Projekteur ermöglicht, nur die durch seine Projektierungsschritte bewirkten Objektänderungen zu laden. Darüber hinaus ist ein Engineering-System zu schaffen, welches zur Durchführung des Verfahrens geeignet ist.

Diese Aufgabe wird im Hinblick auf das Verfahren dadurch gelöst
- dass vor einem erneuten Laden von Objekten
   - für jeden neuen Projektierungsschritt ermittelt wird, an welchen Objekten bei dem Projektierungsschritt eine Änderung ausgelöst wurde,
   - einem Anwender angezeigt wird, ob die Änderung eines Objektes durch einen oder mehrere der neuen Projektierungsschritte ausgelöst wurde, und
- dass
   - für den Fall, dass die Änderung eines Objekts durch einen der neuen Projektierungsschritte ausgelöst wurde, die mittels des einen der neuen Projektierungsschritte geänderten Objekte geladen werden, falls der Anwender diesen einen der neuen Projektierungsschritte selektiert, und
   - für den Fall, dass die Änderung eines Objekts mittels mehrerer der neuen Projektierungsschritte ausgelöst wurde, alle mittels dieser mehreren neuen Projektierungsschritte geänderten Objekte geladen werden, falls der Anwender einen dieser mehreren neuen Projektierungsschritte selektiert.

Bezüglich des Engineering-Systems wird diese Aufgabe durch die im kennzeichnenden Teil des Anspruchs 3 angegebenen Maßnahmen gelöst.

Vorteilhaft ist, dass der Projekteur weiß, welche geänderten Objekte er bei einem erneuten Laden in das Automatisierungsgerät lädt, wobei ferner verhindert wird, dass der Projekteur unbewusst geänderte Objekte in das Automatisierungsgerät lädt, die ein anderer Projekteur bewerkstelligt hat. Es wird ein konsistentes Laden auf "feingranularer" Ebene ermöglicht, der Projekteur kann genau die mittels eines Projektierungsschrittes bewirkten geänderten Objekte in das Automatisierungsgerät laden.

In einer Ausgestaltung der Erfindung ist vorgesehen, in einer Übersichtstabelle anzuzeigen, welche Projektierungsschritte an welchen Objekten Änderungen auslösten. Dadurch kann der Projekteur sofort erkennen, welche Projektierungsschritte welche Objekte beeinflussten bzw. an welchen Objekten die Projektierungsschritte Änderungen auslösten.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen
- Figur 1: die Beziehung zwischen Projektierungsschritten und Objektänderungen,
- Figur 2: eine Übersichtstabelle und
- Figur 3: einen CFC-Plan.

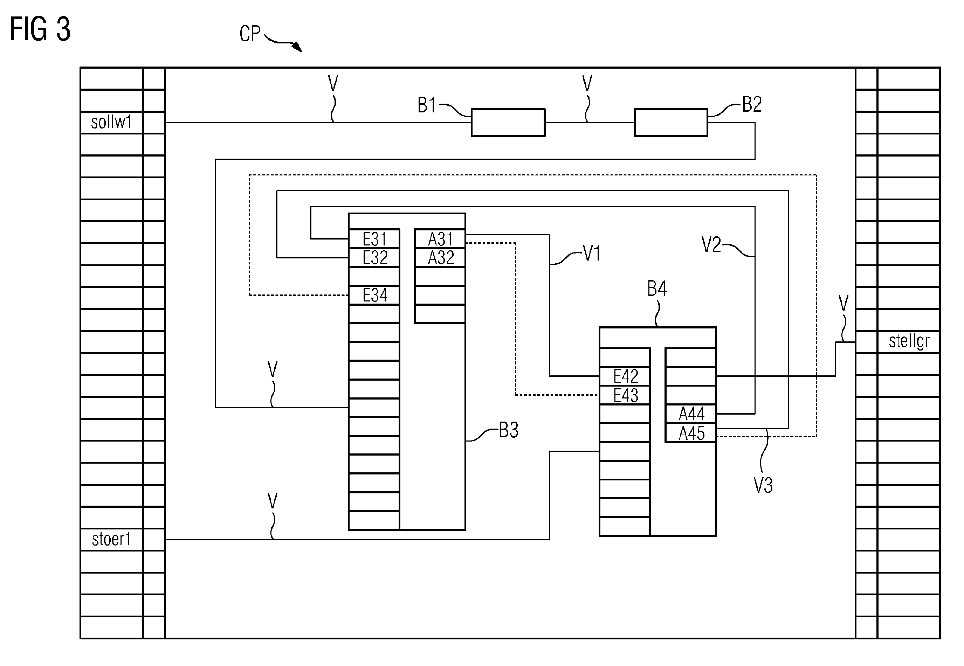

Es wird zunächst auf Figur 3 verwiesen, in welcher ein an sich bekannter CFC (Continuous Function Chart)-Plan CP in einer Blattsicht dargestellt ist. Diesen CFC-Plan CP erstellt ein Projekteur mittels eines CFC-Editors eines Engineering-Systems im Rahmen einer grafischen Projektierung eines Steuerprogramms für ein Automatisierungsgerät, welches über eine geeignete Busverbindung mit dem Engineering-System Informationen austauscht. Der Projekteur kann zur Erstellung des Steuerprogramms und somit zur Lösung einer Steueraufgabe auf vorgefertigte Bausteine eines Bausteinvorrats zugreifen, wobei für den Fall, dass der Projekteur per Drag&Drop einen Baustein aus dem Bausteinvorrat für den CFC-Plan CP auswählt, eine Baustein-Instanz gebildet wird, die der Projekteur im CFC-Plan CP positioniert, schließlich parametriert und mit einem oder mehreren ebenfalls per Drag&Drop ausgewählten und positionierten Bausteinen verschaltet. Im Folgenden werden unter dem Begriff "Bausteine" sowohl die Bausteine des Bausteinvorrats - die Bausteintypen (Bausteinvorlagen) - als auch die aus den Bausteintypen gebildeten Baustein-Instanzen (Instanz-Bausteine) verstanden.

Im vorliegenden Beispiel weist der erstellte CFC-Plan vier parametrierte und verschaltete Bausteine B1, B2, B3, B4 auf, von denen z. B. ein Ausgang A31 des Bausteins B3 mit einem Eingang E42 des Bausteins B4 über eine Verbindung V1 verschaltet und Ausgänge A44, A45 des Bausteins B4 mit Eingängen E31, E32 des Baustein B3 über Verbindungen V2, V3 verschaltet sind. Selbstverständlich weist der CFC-Plan weitere Verschaltungen auf, die in der Zeichnung mit einem Bezugszeichen V gekennzeichnet sind.

Aus diesem CFC-Plan CP erzeugt der CFC-Editor oder eine weitere geeignete Software des Engineering-Systems mittels des Automatisierungsgerätes weiterverarbeitbare Objekte des Steuerprogramms, z. B. Objekte in Form von Funktions-Codebausteinen, Global Daten- oder Instanz-Datenbausteinen, die nach einer entsprechenden Menüeingabe des Projekteurs in das Automatisierungsgerät geladen werden. Das Automatisierungsgerät übersetzt diese Objekte in einen Maschinencode für eine CPU des Automatisierungsgerätes, wobei die CPU schließlich diesen Maschinencode in einem RUN-Betrieb verarbeitet, während dessen das Automatisierungsgerät einen technischen Prozess bzw. eine Anlage steuert.

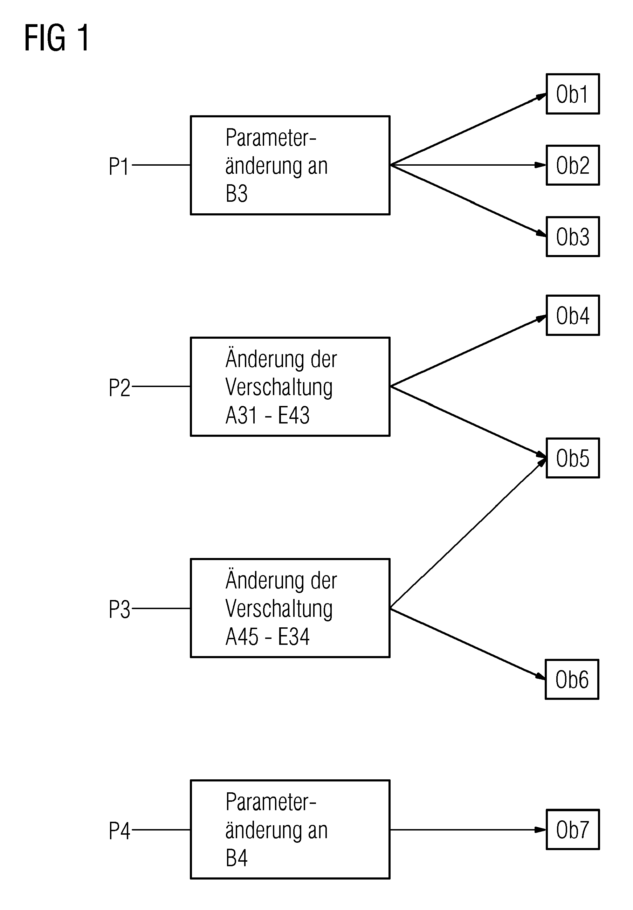

Es wird im Folgenden angenommen, dass im Rahmen eines Concurrent-Engineerings Projekteure den CFC-Plan CP zu Testzwecken ändern, nachdem die Objekte des CFC-Plans CP bereits mittels des CFC-Editors oder der weiteren Software in das Automatisierungsgerät geladen wurden. Zur näheren Erläuterung wird dazu auf Figur 1 verwiesen, in welcher in einer vereinfachten Form die Beziehung zwischen Projektierungsschritten und Objektänderungen veranschaulicht ist.

Ein erster Projekteur ändert z. B. in einem Projektierungsschritt P1 einen Parameter eines der Eingänge des Bausteins B3 sowie in einem Projektierungsschritt P2 die Verschaltung der Bausteine B3, B4 derart, dass nun der Ausgang A31 des Bausteins B3 nicht mit dem Eingang E42 sondern mit einem Eingang E43 des Bausteins B4 verschaltet ist, was in der Figur 3 durch eine gestrichelte Linie dargestellt ist. Ein zweiter Projekteur ändert in einem Projektierungsschritt P3 auch die Verschaltung der Bausteine B3, B4, wobei dieser Projekteur nun den Ausgang A45 des Bausteins B4 nicht mit dem Eingang E32 sondern mit einem Eingang E34 des Bausteins B3 verschaltet, was in der Figur 3 ebenfalls durch eine gestrichelte Linie dargestellt ist. Ferner ändert der zweite Projekteur in einem weiteren Projektierungsschritt P4 den Parameter eines Eingangs des Bausteins B4.

Es wird angenommen, dass aufgrund des neuen Projektierungsschritts P1 (Parameteränderung am Baustein B3) sich neu zu ladende Objekte Ob1, Ob2, Ob3 und aufgrund des neuen Projektierungsschritts P2 (neue Verschaltung des Ausgang A31 des Bausteins 3 an Eingang E43 des Bausteins B4) sich neu zu ladende Objekte Ob4, Ob5 änderten. Ferner wird angenommen, dass der neue Projektierungsschritt P3 (neue Verschaltung des Ausgangs A45 des Bausteins B4 an den Eingang E34 des Bausteins B3) ebenfalls eine Änderung an dem Objekt Ob5 auslöste sowie ein Objekt Ob6 änderte, was bedeutet, dass sowohl der Projektierungsschritt P2 als auch der Projektierungsschritt P3 das Objekt Ob5 beeinflusst und Änderungen an diesem Objekt Ob5 bewirkt bzw. Änderungen an diesem Objekt Ob5 ausgelöst hat. Der neue Projektierungsschritt P4 (Parameteränderung am Baustein B4) änderte im vorliegenden Ausführungsbeispiel lediglich ein Objekt Ob7, dieser Projektierungsschritt P4 des zweiten Projekteurs beeinflusst also keine durch Projektierungsschritte P1, P2 des ersten Projekteurs hervorgerufenen Objektänderungen. Der Einfluss des jeweiligen Projektierungsschritts P1, P2, P3, P4, d. h. die von diesen Projektierungsschritten ausgelösten Änderungen an den Objekten Ob1 bis Ob7, werden für jeden dieser Projektierungsschritte P1 bis P4 durch den CFC-Editor oder der weiteren Software des Engineering-Systems, das beispielsweise einen Server und mehrere Rechner mit Anzeigeeinheiten umfasst, ermittelt und in einer geeigneten Form den Projekteuren auf diesen Anzeigeeinheiten dargestellt.

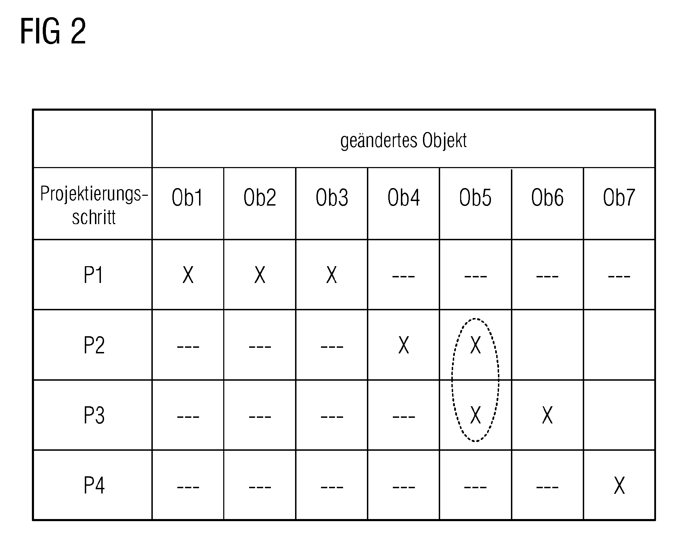

In Figur 2 ist eine Übersichtstabelle dargestellt, welche dem ersten und dem zweiten Projekteur auf dessen jeweiliger Anzeigeeinheit angezeigt wird. Der erste Projekteur erkennt mittels dieser Übersichtstabelle, dass sein durchgeführter Projektierungsschritt P1 Änderungen an den Objekten Ob1, Ob2, Ob3 und sein Projektierungsschritt P2 Änderungen an den Objekten Ob4, Ob5 auslöste, was in der Figur 2 durch ein "X" dargestellt ist. Er erkennt ferner, dass der von einem weiteren Projekteur - im vorliegenden Ausführungsbeispiel von dem zweiten Projekteur - bewerkstelligte Projektierungsschritt P3 neben einer Änderung am Objekt Ob6 ebenfalls eine Änderung am Objekt Ob5 auslöste, was in der Figur 2 mittels einer gestrichelten Ellipse angedeutet ist. Der erste Projekteur kann nun entscheiden, ob nur die Objekte geladen werden sollen, die ausschließlich aufgrund seiner Projektierungsschritte geändert wurden oder auch die Objekte, welche von Projektierungsschritten des zweiten Projekteurs geändert wurden.

Für den Fall, dass sich z. B. der erste Projekteur dazu entscheidet, die mittels des Projektierungsschritts P2 geänderten Objekte Ob5, Ob6 in das Automatisierungsgerät zu laden, wählt dieser z. B. mittels einer Maus den Projektierungsschritt P2 auf der Anzeigeeinheit aus, wodurch der CFC-Editor oder die weitere Software alle mittels der Projektierungsschritte P2 und P3 geänderten Objekte Ob4, Ob5, Ob6 in das Automatisierungsgerät lädt. Falls der erste Projekteur ausschließlich die durch seine eigenen Projektierungsschritte beeinflussten Objekte laden möchte, was der Projekteur anhand der Übersichtstabelle erkennt, selektiert der Projekteur die entsprechenden Projektierungsschritte in der Übersichtstabelle. Im vorliegenden Beispiel erkennt der erste Projekteur, dass die Änderungen an den Objekten Ob1, Ob2, Ob3 nur mittels seines Projektierungsschritts P1 ausgelöst wurden, wobei diese Objekte Ob1, Ob2, Ob3 in das Automatisierungsgerät geladen werden, falls der erste Projekteur den Projektierungsschritt P1 auswählt.

In der beschriebenen Art und Weise werden die geänderten Objekte Ob4, Ob5, Ob6 in das Automatisierungsgerät geladen, falls der zweite Projekteur den durch ihn bewerkstelligten Projektierungsschritts P3 in der Übersichtstabelle selektiert. Für den Fall, dass dieser zweite Projekteur den Projektierungsschritt P4 auswählt, wird das geänderte Objekt Ob7 in das Automatisierungsgerät geladen.

## Patentansprüche

1. Verfahren zum Laden von Objekten eines Steuerprogramms in ein Automatisierungsgerät, wobei mittels eines Engineering-Systems
- im Rahmen einer grafischen Projektierung des Steuerprogramms in Projektierungsschritten (P1 bis P4)
- vorgefertigte Bausteine (B3, B4) aus einem Bausteinvorrat ausgewählt sowie in einen Funktionsplan (CP) positioniert werden und
- die Bausteine (B3, B4) parametriert und verschaltet werden,
- aus dem Funktionsplan (CP) die Objekte (Ob1 bis Ob7) des Steuerprogramms erzeugt werden, und
- die Objekte (Ob1 bis Ob7) in eine Verarbeitungseinheit des Automatisierungsgerätes geladen werden,
**dadurch gekennzeichnet,**
- **dass** vor einem erneuten Laden von Objekten (Ob1 bis Ob7)
- für jeden neuen Projektierungsschritt (P1 bis P4) ermittelt wird, an welchen Objekten (Ob1 bis Ob7) bei dem Projektierungsschritt (P1 bis P4) eine Änderung ausgelöst wurde,
- einem Anwender angezeigt wird, ob die Änderung eines Objektes (Ob1 bis Ob7) durch einen oder mehrere der neuen Projektierungsschritte (P1 bis P4) ausgelöst wurde, und
- **dass**
- für den Fall, dass die Änderung eines Objekts (Ob1 bis Ob3; Ob7) durch einen der neuen Projektierungsschritte (P1, P4) ausgelöst wurde, die mittels des einen der neuen Projektierungsschritte (P1, P4) geänderten Objekte (Ob1 bis Ob3; Ob7) geladen werden, falls der Anwender diesen einen der neuen Projektierungsschritte (P1, P4) selektiert, und
- für den Fall, dass die Änderung eines Objekts (Ob5) mittels mehrerer der neuen Projektierungsschritte (P2, P3) ausgelöst wurde, alle mittels dieser mehreren neuen Projektierungsschritte (P2, P3) geänderten Objekte (Ob4 bis Ob6) geladen werden, falls der Anwender einen dieser mehreren neuen Projektierungsschritte (P2, P3) selektiert.

2. Verfahren nach Anspruch 1, **dadurch gekennzeichnet, dass** in einer Übersichtstabelle angezeigt wird, welche Projektierungsschritte (P1 bis P4) an welchen Objekten (Ob1 bis Ob7) Änderungen auslösten.

3. Engineering-System, welches dazu ausgebildet ist
- im Rahmen einer grafischen Projektierung eines Steuerprogramms für ein Automatisierungsgerät in Projektierungsschritten (P1 bis P4)
- vorgefertigte Bausteine (B3, B4) aus einem Bausteinvorrat auszuwählen sowie in einen Funktionsplan (CP) zu positionieren, und
- die Bausteine (B3, B4) zu parametrieren und zu verschalten,
und dazu ausgebildet ist,
- aus dem Funktionsplan (CP) Objekte (Ob1 bis Ob7) für das Steuerprogramm zu erzeugen, und
- die Objekte (Ob1 bis Ob7) in eine Verarbeitungseinheit des Automatisierungsgerätes zu laden,
**dadurch gekennzeichnet, dass** das Engineering-System ferner dazu ausgebildet ist,
- vor einem erneuten Laden von Objekten (Ob1 bis Ob7)
- für jeden neuen Projektierungsschritt (P1 bis P4) zu ermitteln, an welchen Objekten (Ob1 bis Ob7) bei dem Projektierungsschritt (P1 bis P4) eine Änderung ausgelöst wurde,
- einem Anwender anzuzeigen, ob die Änderung eines Objektes (Ob1 bis Ob7) durch einen oder mehrere der neuen Projektierungsschritte (P1 bis P4) ausgelöst wurde,
und ferner dazu ausgebildet ist,
- für den Fall, dass die Änderung eines Objekts (Ob1 bis Ob3; Ob7) durch einen der neuen Projektierungsschritte (P1, P4) ausgelöst wurde, die mittels des einen der neuen Projektierungsschritte (P1, P4) geänderten Objekte (Ob1 bis Ob3; Ob7) zu laden, falls der Anwender diesen einen der neuen Projektierungsschritte (P1, P4) selektiert, und
- für den Fall, dass die Änderung eines Objekts (Ob5) mittels mehrerer der neuen Projektierungsschritte (P2, P3) ausgelöst wurde, alle mittels dieser mehreren neuen Projektierungsschritte (P2, P3) geänderten Objekte (Ob4 bis Ob6) zu laden, falls der Anwender einen dieser mehreren neuen Projektierungsschritte (P2, P3) selektiert.

4. Engineering-System nach Anspruch 3, **dadurch gekennzeichnet, dass** das Engineering-System dazu ausgebildet ist, auf einer Anzeigeeinheit in einer Übersichtstabelle anzuzeigen, welche Projektierungsschritte (P1 bis P4) an welchen Objekten (Ob1 bis Ob7) Änderungen auslösten.
